# EUROPÄISCHE PATENTSCHRIFT

(11) **EP 0 491 179 B1**
(45) Veröffentlichungstag und Bekanntmachung des Hinweises auf die Patenterteilung: **25.10.1995**
(21) Anmeldenummer: 91119830.7
(22) Anmeldetag: 21.11.1991
(51) Int. Cl.: H04L 12/40, B60R 16/02

(54) **Linearer Datenbus**
Linear data bus
Bus linéaire de données

(30) Priorität: 11.12.1990 DE 4039483
(43) Veröffentlichungstag der Anmeldung: 24.06.1992
(73) Patentinhaber: Bayerische Motoren Werke Aktiengesellschaft, 80788 München (DE)
(72) Erfinder: Ranzinger, Günter, W-8046 Garching (DE)

(56) Entgegenhaltungen:
- WO-A-86/04195
- FR-A- 2 578 070
- US-A- 4 694 421
- PATENT ABSTRACTS OF JAPAN vol. 5, no. 145 (E-74)(817) 12. September 1981 & JP-A-56 079 551

## Beschreibung

Die Erfindung bezieht sich auf einen linearen Datenbus nach dem Oberbegriff des Patentanspruchs 1.

Bei einem derartigen Datenbus, wie er beispielsweise aus der Informationsschrift über den sog. CAN-Datenbus ("CAN-Controller-Area-Network") der Fa. Bosch von 1987 bekannt ist, handelt es sich um einen seriellen Datenbus. Dieser CAN-Datenbus arbeitet mit hoher Übertragungsgeschwindigkeit, wodurch einerseits Reflexionen, andererseits elektromagnetische Abstrahlung entsteht. Zur Verhinderung dieser Abstrahlung werden die zwei parallelen Datenbusleitungen an ihren beiden Enden jeweils mit einem Abschlußwiderstand verbunden. Diese Abschlußwiderstände wirken weiterhin einer elektromagnetischen Einstrahlung entgegen, die durch offene Leitungsenden möglich ist. Um Ein- und Abstrahlung zwischen den Enden der Datenbusleitungen zu verhindern, werden die Datenbusleitungen geschirmt. Wie aus der Informationsschrift hervorgeht, werden bei dem CAN-Datenbus die Abschlußwiderstände außerhalb der Busteilnehmer an die Enden der Datenbusleitungen, z.B. in Form eines geschirmten Abschlußsteckers, sehr aufwendig und kostenintensiv angebracht, da anderenfalls die Schirmwirkung gegen elektromagnetische Ein- und Abstrahlung aufgehoben wird.

Ein gattungsgemäßer Datenbus geht auch aus der Offenlegungsschrift DE 35 06 118 A1 hervor, bei dem ebenfalls die über einen Abschlußwiderstand miteinander verbundenen Enden der Datenbusleitungen außerhalb der an den Datenbusleitungen angeschlossenen Busteilnehmer liegen. Für die Enden der Datenbusleitungen sind daher eigenständige Vorrichtungen (passive Busabschlüsse) vorgesehen, die zur Erhöhung des Aufwands und der Kosten der Busstruktur führen.

Aus der WO 86/04195 geht hervor, daß in Busteilnehmern eines Datenbusses für lokale Rechnernetzwerke Widerstandsnetzwerke vorgehalten werden, die bei Bedarf wirksam geschaltet werden können. Jedoch sind Datenbussysteme für lokale Rechnernetzwerke nicht für die Anwendung in Kraftfahrzeugen geeignet, da sie nicht echtzeitfähig und zu teuer sind. Darüber hinaus wird beim Gegenstand der WO 86/04195 das Wirksamschalten der vorgehaltenen Widerstandsnetzwerke innerhalb der Busteilnehmer vorgenommen. Somit ist eine Änderung in der Anordnung der Busteilnehmer nur durch einen Eingriff in die Busteilnehmer selbst möglich.

Der Erfindung liegt die Aufgabe zugrunde, bei Beibehaltung der Schirmwirkung gegen elektromagnetische Ein- und Abstrahlung die Abschlußwiderstände möglichst einfach und kostengünstig an den Datenbus anzuschließen. Darüber hinaus soll gleichzeitig die Flexibilität des linearen Datenbusses bezüglich der Anordnung der Busteilnehmer erhöht werden.

Diese Aufgabe wird durch die Merkmale des einzigen Patentanspruchs gelöst.

Erfindungsgemäß wird ein linearer Datenbus eingangs genannter Art durch folgende Maßnahmen verbessert:
- Die Busteilnehmer sind jeweils über einen ersten und einen zweiten Steckkontakt an den Datenbusleitungen angeschlossen.
- In allen Busteilnehmern ist zwischen dem zweiten und einem dritten Steckkontakt ein offener Widerstand mit dem Wert eines Abschlußwiderstandes integriert.
- Außerhalb der Busteilnehmer ist zwischen dem ersten und dem dritten Steckkontakt eine Verbindungsleitung derart anbringbar, daß die jeweils über einen Abschlußwiderstand miteinander verbundenen Enden der Datenbusleitungen im ersten und letzten Busteilnehmer integriert sind.

Demnach enden die Datenbusleitungen erfindungsgemäß jeweils im ersten und letzten Busteilnehmer des Datenbusses. Die Schirmwirkung an den Enden der Datenbusleitungen wird durch das Gehäuse der Busteilnehmer fortgesetzt, sofern, wie allgemein üblich, auch die Gehäuse eine Schirmwirkung besitzen. Die Abschlußwiderstände werden jeweils mindestens in den ersten und letzten Busteilnehmer integriert und darin an die zwei Datenbusleitungen angeschlossen.

Durch den Anschluß der Abschlußwiderstände im Gehäuse der Busteilnehmer werden konstenintensive Abschlußvorrichtungen, z. B. geschirmte Abschlußstecker, und zusätzliche Schirmungsmaßnahmen an den Enden der Datenbusleitungen eingespart.

Da in der Praxis bei Kraftfahrzeugen die Anzahl und die Anordnung der Busteilnehmer des gleichen Datenbusses, z. B. funktionsbedingt oder typabhängig, variiert werden, kann ein Busteilnehmer an den Enden oder zwischen den Enden der Datenbusleitungen angebracht sein. Um keine Änderung der Hardware eines Busteilnehmers vornehmen zu müssen, wenn dieser Busteilnehmer sowohl an den Enden als auch zwischen den Enden der Datenbusleitungen angebracht sein kann, wird in jedem Busteilnehmer ein offener Widerstand mit dem Wert eines Abschlußwiderstandes vorgesehen, der bei Bedarf als Abschlußwiderstand wirksam geschaltet wird. Hierdurch wird eine hohe Flexibilität in der Anordnung der Busteilnehmer erreicht.

An dem Stecker jedes Busteilnehmers sind erfindungsgemäß drei Steckkontakte vorgesehen. Am ersten und zweiten Steckkontakt sind jeweils die beiden Datenbusleitungen angeschlossen. Zwischen dem dritten und zweiten Steckkontakt liegt in jedem Busteilnehmer ein Widerstand mit dem Wert eines Abschlußwiderstandes. Wird ein Busteilnehmer als erster oder letzter des Datenbusses eingesetzt, wird der erste und dritte Steckkontakt mit einer Verbindungsleitung verbunden, so daß der Widerstand als Abschlußwiderstand zwischen den beiden Datenbusleitungen liegt. Ist derselbe Busteilnehmer nicht am Ende des Datenbusses angeordnet, werden der erste und dritte Steckkontakt nicht miteinander verbunden. Hierdurch wird der Abschlußwiderstand sehr einfach wirksam geschaltet.

Da die Verbindungsleitungen zwischen dem ersten und dem dritten Steckkontakt an den Enden der Datenbusleitungen außerhalb der Busteilnehmer vorgesehen sind, können die Busteilnehmer eines Datenbusses ohne Änderung der Hardware beliebig zwischen den Enden oder an den Enden der Datenbusleitungen ausgetauscht werden.

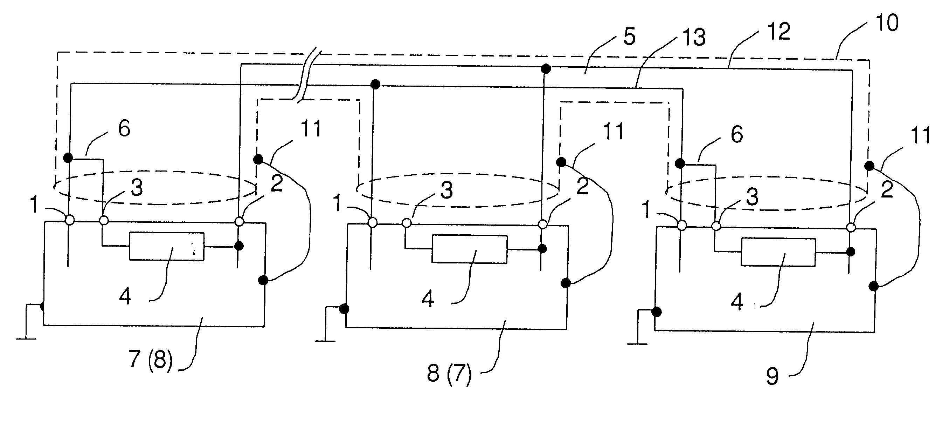

In der Zeichnung ist ein Ausführungsbeispiel der Erfindung dargestellt. Sie zeigt einen erfindungsgemäßen Datenbus mit mehr als zwei Busteilnehmern.

An dem Datenbus 5, bestehend aus den zwei parallelen Datenbusleitungen 12 und 13, sind mehrere Busteilnehmer 7, 8 und 9 angeschlossen. Der Datenbus 5 wird von einem Schirm 10 ummantelt. Der Schirm 10 endet jeweils an den Gehäusen der Busteilnehmer 7, 8 und 9. Über eine Verbindungsleitung 11 jeweils zwischen dem Schirm 10 und den Gehäusen der Busteilnehmer 7, 8 und 9 ist der Schirm 10 mit Masse verbunden. Die Abschlußwiderstände 4 sind in den Busteilnehmern 7, 8 und 9 jeweils zwischen den Steckkontakten 2 und 3 angeordnet. Die Busteilnehmer 7, 8 und 9 sind über die Datenbusleitung 12 an den Steckkontakten 2 und über die Datenbusleitung 13 an den Steckkontakten 1 miteinander verbunden. Der Datenbus 5 endet in den Busteilnehmern 7 und 9. Außerhalb der Busteilnehmer 7 und 9 ist jeweils eine Verbindungsleitung 6 zwischen den Steckkontakten 1 und 3 angeschlossen, um die Abschlußwiderstände 4 wirksam zu schalten. Der Busteilnehmer 8 stellt einen Busteilnehmer zwischen den Enden der Datenbusleitungen dar. Im Busteilnehmer 8 entfällt die Verbindungsleitung 6 zwischen den Steckkontakten 1 und 3, wodurch der Abschlußwiderstand 4 des Busteilnehmers 8 nicht wirksam geschaltet ist.

Der Schirm 10 mit den Verbindungsleitungen 11 zu den an Masse angeschlossenen Gehäusen der Busteilnehmer 7, 8 und 9 ergibt eine durchgehende Schirmwirkung über der Datenbusleitung und den angeschlossenen Busteilnehmern 7, 8 und 9. Die Realisierung der Schirmwirkung dieses Ausführungsbeispieles hat gegenüber dem Stand der Technik den Vorteil, daß kostenintensive und aufwendige Abschlußvorrichtungen an den Enden des Datenbusses vermieden werden.

Die Abschlußwiderstände 4 sind in jedem Busteilnehmer angeordnet und die Verbindungsleitung 6 an den Enden des Datenbusses sind außerhalb der Busteilnehmer 7 und 9 angebracht, so daß ein Vertauschen, z.B. der Busteilnehmer 7 und 8, ohne weitere Hardwaremaßnahme möglich ist.

Endet bei einer nicht dargestellten Ausführungsform der Datenbus dagegen im Busteilnehmer 8, so wird der Abschlußwiderstand 4 im Busteilnehmer 8 durch die Verbindungsleitung 6 zwischen den Steckkontakten 1 und 3 auf einfache Weise wirksam geschaltet.

Mit der erfindungsgemäßen Ausführungsform des Datenbusses werden optimale Maßnahmen gegen Ein- u. Abstrahlung sowohl kostensparend, als auch technisch einfach erzielt, wobei gleichzeitig Flexibilität in der Anordnung der Busteilnehmer möglich ist.

## Patentansprüche

1. Linearer Datenbus (5) in Kraftfahrzeugen bestehend aus zwei parallelen, an ihren beiden Enden jeweils über einen Abschlußwiderstand (4) miteinander verbundenen Datenbusleitungen (12, 13), an denen Busteilnehmer (7, 8, 9) angeschlossen sind, dadurch gekennzeichnet, daß die Busteilnehmer (7, 8, 9) jeweils über einen ersten und einen zweiten Steckkontakt (1, 2) an den Datenbusleitungen (12, 13) angeschlossen sind, daß in allen Busteilnehmern (7, 8. 9) zwischen dem zweiten und einem dritten Steckkontakt (2, 3) ein offener Widerstand (4) mit dem Wert eines Abschlußwiderstandes integriert ist und daß außerhalb der Busteilnehmer (7, 8, 9) zwischen dem ersten und dritten Steckkontakt (1 und 3) eine Verbindungsleitung (6) derart anbringbar ist, daß die jeweils über einen Abschlußwiderstand (4) miteinander verbundenen Enden der Datenbusleitungen (12, 13) im ersten und letzten Busteilnehmer (7, 9) integriert sind.

## Claims

1. A linear data bus (5) in motor vehicles, comprising two parallel data bus lines (12, 13) connected together at each end via a terminating resistor (4), the lines being connected to bus subscriber's stations (7, 8, 9), characterised in that the bus subscriber's stations (7, 8, 9) are each connected by a first and a second plug (1, 2) to the data bus lines (12, 13), an open resistor (4) having the value of a terminating resistor is incorporated in all bus subscriber's stations (7, 8, 9) between the second and a third plug (2, 3), and a connecting line (6) is disposed outside the bus subscriber's stations (7, 8, 9) between the first and third plug (1 and 3) in such a manner that the ends of the data bus lines (12, 13) interconnected by a terminating resistor (4) are incorporated in the first and in the last subscriber's station (7, 9).

## Revendications

1. Bus linéaire de données (5) dans des véhicules à moteur, consistant en deux lignes de bus de données (12, 13), parallèles, reliées l'une à l'autre à leurs deux extrémités, respectivement au moyen d'une résistance de fermeture (4), lignes auxquelles sont raccordés des participants de bus (7, 8, 9), bus linéaire de données caractérisé en ce que les participants de bus (7, 8, 9) sont respectivement raccordés au moyen d'un premier et d'un second contact à fiches (1, 2) aux lignes de bus de données (12, 13), en ce que dans tous les participants de bus (7, 8, 9) on intègre entre le second contact à fiches et un troisième contact à fiches (2, 3) une résistance ouverte (4) avec la valeur d'une résistance de fermeture et en ce qu'en dehors des participants de bus (7, 8, 9) on peut mettre une ligne de liaison (6) de telle sorte que les extrémités des lignes de bus de données (12, 13), respectivement reliées les unes avec les autres au moyen d'une résistance de fermeture (4), soient intégrées dans le premier et le dernier participant de bus (7, 9).
